# EUROPEAN PATENT APPLICATION

(11) **EP 2 141 039 A2**
(43) Date of publication of application: **06.01.2010**
(21) Application number: 09008274.4
(22) Date of filing: 24.06.2009
(51) Int. Cl.: B60K 5/12, F16F 13/10, F16F 13/14

(54) **Power unit support structure**

(30) Priority: 30.06.2008 JP 2008171089
(71) Applicant: TOKAI RUBBER INDUSTRIES, LTD., Komaki-shi, Aichi, 485-8550 (JP)
(72) Inventor: Hamada, Masaaki, Komaki-shi, Aichi, 485-8550 (JP); Ihara, Yoshio, Komaki-shi, Aichi, 485-8550 (JP); Ishikawa, Ryota, Komaki-shi, Aichi, 485-8550 (JP)
(74) Representative: Kuhnen & Wacker

(57) **Abstract**

A power unit support structure (10) adapted to provide vibration-damped support of an power unit (12) of an automobile of FR longitudinal engine design on a vehicle body via engine mounts situated at two locations towards a vehicle front end and one location towards a vehicle back end, respectively. Of the engine mounts disposed at the three locations, a fluid-filled vibration-damping device (25, 66, 92) exhibiting vibration-attenuating action based on flow action of non-compressible fluid filling the interior thereof is employed as a rear engine mount (24, 60, 90) disposed at the vehicle back end, and the vibration-attenuating action based on the flow action of the non-compressible fluid is exhibited against vibration input in a vehicle longitudinal direction.

## Description

### INCORPORATED BY REFERENCE

The disclosure of Japanese Patent Application No. 2008-171089 filed on June 30, 2008 including the specification, drawings and abstract is incorporated herein by reference in its entirety.

### BACKGROUND OF THE INVENTION

### 1. Field of the Invention

The present invention relates in general to a power unit support structure adapted to provide vibration-damped support of an automobile power unit on a vehicle body, and relates in particular to a power unit support structure adapted to provide effective vibration-damping action against yawing vibration of the power unit.

### 2. Description of the Related Art

As well known in the art, an automotive power unit integrally incorporating an engine and transmission is provided with vibration-damped support on the vehicle body at several locations by engine mounts in order to reduce transmission of vibration to the vehicle body. Particularly in the case of a longitudinal engine in an FR (front engine/rear drive) vehicle, the front-to-back dimension of the power unit will be larger than its vehicle-lateral dimension, and the weight of the power unit towards the front of the vehicle will exceed the weight of the transmission towards the rear. For this reason, power units are typically supported in vibration-damped manner on the vehicle by engine mounts situated at a total of three locations, i.e. two locations towards the front and a single location towards the rear.

Particularly for power units that are oriented with the long axis aligned with the vehicle front-to-back direction, the problem of yawing vibration, which refers to displacement in the nature of cyclic circling motion of the rear part of the power unit about a center of oscillation lying towards the front, has been pointed out. Such yawing vibration represents vibration of a rigid body caused by vibratory force transmitted from the road face or cranking, and acting to induce vibration of the power unit; it is due to the fact that support spring rigidity at the rear of the power unit is lower than that at the front, in association with the weight distribution of the power unit in its longitudinal direction. Typically it will take the form of large-amplitude vibration in a low frequency range of around 10 Hz, so in rear engine mounts of conventional design, it was difficult to attain sufficient vibration-damping action against such yawing vibration.

To address this issue, it has been proposed, for example in Japanese unexamined patent publication No. JP-A-11-190383, to employ as the rear engine mount a fluid-filled vibration-damping device having several fluid chambers filled with a fluid and communicating via orifice passages. JP-A-11-190383 discloses a power unit support structure wherein a fluid-filled vibration-damping device is oriented such that vibration-attenuating action based on flow action of the fluid will be exhibited against vibration input in the vehicle lateral direction. According to this design, low-frequency vibration (crank vibration) of the power unit in the roll direction when the engine is started or stopped can be reduced, and it is conceivable that effective vibration-damping action against yawing vibration, which is similarly low-frequency vibration, could be obtained as well.

However; idling vibration, which has a somewhat higher frequency than crank vibration, is also known to be vibration that occurs in the roll direction. In automobiles, damping action against such idling vibration represents an important vibration-damping capability. Moreover, vibration-damping action produced by an orifice passage will be effective only in the relatively narrow frequency range to which the orifice passage has been tuned, and it is well known that when subjected to vibration in a higher frequency range than its tuning frequency range, an orifice passage will become substantially obstructed and exhibit high dynamic spring, so that satisfactory vibration-damping action will not be attained.

For this reason, in the power unit support structure disclosed in JP-A-11-190383, it would be conceivable to tune the orifice passage of the rear engine mount to the crank vibration frequency, thereby possibly improving its vibration-damping action against yawing vibration. However, there is an unavoidable problem that, if tuned in this way, high dynamic spring may result in the event that idling vibration of somewhat higher frequency than crank vibration is input in the same roll direction, and may cause markedly diminished vibration-damping action against idling vibration. Consequently, in view of the importance of vibration-damping action against idling vibration, the invention disclosed in JP-A-11-190383 could never be practicable.

### SUMMARY OF THE INVENTION

It is therefore one object of this invention to provide a power unit support structure of novel design that will exhibit effective vibration-damping action against idling vibration, while also exhibit effective vibration-damping action against yawing vibration of the power unit.

In addressing this issue, the inventors took note of the fact that while idling vibration is substantially devoid of amplitude in the vehicle longitudinal direction, yawing vibration also includes amplitude in the vehicle longitudinal direction. Specifically, idling vibration is small-amplitude vibration centered on the principal axis of inertia of roll of the power unit, and is substantially devoid of amplitude in the vehicle longitudinal direction, since the power unit as a whole moves about the principal axis of inertia of roll. On the other hand, in the case of yawing vibration, as mentioned previously, while support spring rigidity is greater and vibration amplitude is smaller towards the vehicle front end of the power unit due to the unit being supported at two locations and to the greater weight of the engine, large vibration amplitude is observed at the vehicle back end of the power unit, where the distributed load is smaller and support spring rigidity is lower. That is, note was taken of the fact that there is an appreciable difference in vibration mode between idling vibration and yawing vibration; and particularly of the fact that there is a large difference between the two in terms of the magnitude of vibration amplitude at the vehicle back end section of the power unit in particular. Specifically, in the case of yawing vibration, the vehicle back end of the power unit experiences appreciable yaw, and displacement at the vehicle back end of the power unit will have a vehicle longitudinal direction component of a magnitude that cannot be ignored. For example, in the case of large-amplitude vibration such as yawing vibration, when viewed hypothetically in the vehicle lateral direction, translation motion in the vehicle longitudinal direction will be observed to be accompanied by large vibrational displacement along an arc extending in the vehicle vertical direction, so such vibration will have effective amplitude in the vehicle longitudinal direction as well.

The inventors perfected the present invention on the basis of this novel discovery that idling vibration is substantially devoid of amplitude in the vehicle longitudinal direction, while yawing vibration also includes amplitude in the vehicle longitudinal direction.

The above and/or optional objects of this invention may be attained according to at least one of the following modes of the invention. The following modes and/or elements employed in each mode of the invention may be adopted at any possible optional combinations. It is to be understood that the principle of the invention is not limited to these modes of the invention and combinations of the technical features, but may otherwise be recognized based on the teachings of the present invention disclosed in the entire specification and drawings or that may be recognized by those skilled in the art in the light of the present disclosure in its entirety.

A first mode of the invention provides a power unit support structure adapted to provide vibration-damped support of a power unit of an automobile of FR longitudinal engine design on a vehicle body via engine mounts situated at two locations towards the vehicle front end and one location towards the vehicle back end, respectively; the power unit support structure **characterized in that:** of the engine mounts disposed at the three locations, a fluid-filled vibration-damping device exhibiting vibration-attenuating action based on flow action of non-compressible fluid filling the interior thereof is employed as a rear end mount disposed at the vehicle back end; and vibration-attenuating action based on flow action of non-compressible fluid is exhibited against vibration input in the vehicle longitudinal direction.

With the power unit support structure constructed according to the present mode, vibration-attenuating action based on flow action of non-compressible fluid of the rear end mount will be exhibited against vibration input in the vehicle longitudinal direction. Accordingly, the fluid-filled vibration-damping device of the present mode will be designed so as to exhibit effective vibration-attenuating action against vibration in the low-frequency range of yawing vibration, which is around 10 Hz. As noted, because the center of gravity of the power unit lies towards the vehicle front end, yawing vibration thereof takes the form of large-amplitude vibration accompanying translation motion in the vehicle longitudinal direction, and at the back end describes circular motion about a principal axis of inertia of yaw, with the front end as the center of oscillation. Thus, the vibration-attenuating action afforded by the fluid-filled vibration-damping device that is employed as the rear end mount for supporting the power unit at its vehicle back end will be exhibited against the vibration input of a vehicle longitudinal direction component, thereby affording effective vibration-damping action of yawing vibration.

In the present mode in particular, because the high attenuating action of the fluid-filled vibration-damping device is exhibited against vibration input in the vehicle longitudinal direction, in the event of input of idling vibration having a frequency range higher than yawing vibration, i.e. about 20 Hz to about 40 Hz, since this idling vibration is small-amplitude vibration having substantially no vehicle longitudinal direction component, the fluid-filled vibration-damping device may be prevented from exhibiting very high dynamic spring. Accordingly, with the power unit support structure according to the present mode, yawing vibration can be reduced, while at the same time affording effective vibration-damping action against idling vibration.

In the present mode, FR design refers to a drive system of front engine/rear drive design whereby driving power of an engine situated at the front of the vehicle is increased or decreased by the transmission and then transmitted to the rear wheels through a propeller shaft extending in the vehicle longitudinal direction. A longitudinal engine design refers to one in which the axial direction of the engine crankshaft is aligned with the vehicle longitudinal direction. As the front mounts situated on the front end of the vehicle, there may be suitably employed engine mounts of conventional design, preferably fluid-filled vibration-damping devices of conventional design.

A second mode of the present invention resides in a power unit support structure according to the first mode, wherein a first fluid-filled vibration-damping device is employed as the rear engine mount, the first fluid-filled vibration-damping device including: a first mounting member mounted on one of a power unit side or a vehicle body side; a second mounting member mounted on another of the power unit side or the vehicle body side; a main rubber elastic body elastically connecting the first and second mounting member; a plurality of fluid chambers whose walls are partially defined by the main rubber elastic body and that are filled with non-compressible fluid; and a first orifice passage interconnecting the plurality of fluid chambers, the first fluid-filled vibration-damping device adapted to exhibit vibration-attenuating action based on flow action of non-compressible fluid through the first orifice passage.

According to this mode, if vibration is input across the first mounting member and the second mounting member, relative pressure fluctuations will arise between the plurality of fluid chambers, and effective vibration-attenuating action will be exhibited on the basis of resonance action etc. of fluid caused to flow through the orifice passage connecting the fluid chambers.

A third mode of the present invention resides in a power unit support structure according to the second mode wherein the main rubber elastic body which partially defines the walls of the fluid chambers in the first fluid-filled vibration-damping device is of symmetrical shape to either side of the fluid chambers in the vehicle vertical direction, when positioned supporting the power unit.

According to this mode, if yawing vibration or similar vibration having a vehicle longitudinal direction component is input, relative capacity changes will arise among the plurality of fluid chambers and give rise to fluid flow through the first orifice passage; whereas if idling vibration or similar vibration directed in the vehicle vertical direction is input, relative capacity changes among the plurality of fluid chambers will be smaller, thereby avoiding giving rise to fluid flow through the first orifice passage at times of input of idling vibration so that more consistent vibration-damping action may be exhibited against idling vibration.

A fourth mode of the present invention resides in a power unit support structure according to the second or third mode wherein the first fluid-filled vibration-damping device is constituted such that the second mounting member having a tubular profile is disposed a prescribed distance away to an outside of the first mounting member having a solid or hollow rod profile, with the first mounting member and the second mounting member linked by the main rubber elastic body, and a plurality of the fluid chambers are disposed about the first mounting member along a circumferential direction of the second mounting member, with at least one pair of the plurality of fluid chambers communicating with one another through the first orifice passage; and wherein the rear engine mount is positioned such that the fluid chambers communicating with each other through the first orifice passage are situated in opposition to either side of the first mounting member in the vehicle longitudinal direction.

According to this mode, if vibration is input in the vehicle longitudinal direction across the first mounting member and the second mounting member, relative pressure fluctuations will arise between those fluid chambers that have been situated to either side of the first mounting member in the vehicle longitudinal direction. As a result, fluid flow will arise in the first orifice passage, and effective high attenuating action can be obtained. Thus, effective vibration-damping action can be exhibited against yawing vibration that has a vehicle longitudinal direction component.

A fifth mode of the present invention resides in a power unit support structure according to any of the second to fourth modes wherein a second fluid-filled vibration-damping device is employed as the rear engine mount, the second fluid-filled vibration-damping device including: a pressure-receiving chamber adapted to give rise to pressure fluctuations on the basis of elastic deformation of the main rubber elastic body at times of input of vibration in a vehicle vertical direction; an equilibrium chamber whose wall is partially defined by a flexible film and adapted to allow change in capacity, the pressure-receiving chamber and the equilibrium chamber being filled with non-compressible fluid; and a second orifice passage interconnecting the pressure-receiving chamber and the equilibrium chamber.

According to this mode, if vibration is input in the vehicle vertical direction, a relative pressure fluctuation will arise between the pressure-receiving chamber and the equilibrium chamber. As a result, fluid flow will be produced through the second orifice passage, and effective high attenuating action will be exhibited. Thus, high attenuating action by the second orifice passage can be exhibited against idling vibration which is directed in the vehicle vertical direction, so better vibration-damping action can be exhibited against idling vibration.

A sixth mode of the present invention resides in a power unit support structure according to the fifth mode wherein in the rear engine mount, the plurality of fluid chambers that communicate through the first orifice passage are formed independently of the pressure-receiving chamber and the equilibrium chamber that communicate through the second orifice passage; and wherein of the first orifice passage and the second orifice passage, at times of input of vibration in the vehicle longitudinal direction, effective fluid flow is produced in the first orifice passage only, while at times of input of vibration in the vehicle vertical direction, effective fluid flow is produced in the second orifice passage only.

According to this mode, high attenuating action by the first orifice passage and high attenuating action by the second orifice passage may be exhibited independently of one another, so that by setting the tuning frequency to the first orifice passage to yawing vibration frequency, and tuning frequency to the second orifice passage to idling vibration frequency, effective high attenuating action can be consistently exhibited mutually independently against yawing vibration and idling vibration respectively.

A seventh mode of the present invention resides in a power unit support structure according to the sixth mode wherein the rear engine mount includes both of the first fluid-filled vibration-damping device and the second fluid-filled vibration-damping device, the second fluid-filled vibration-damping device being constituted such that a first input member is positioned at a first open end of and spaced apart from a second input member of tubular profile, with the first input member and the second input member linked by a linking rubber elastic body; another open end of the second input member is closed off by the flexible film, thereby defining between the opposed faces of the linking rubber elastic body and the flexible film a non-compressible fluid-filled zone; the non-compressible fluid-filled zone is bifurcated by a partition member that is supported by the second input member to form a pressure-receiving chamber whose wall is partially defined by the linking rubber elastic body and an equilibrium chamber whose wall is partially defined by the flexible film; and the second orifice passage is formed interconnecting the pressure-receiving chamber and the equilibrium chamber, and the first input member is affixed to the first mounting member of the first fluid-filled vibration-damping device, while the second input member is affixed to the second mounting member of the first fluid-filled vibration-damping device.

According to this mode, vibrations that have been input across the first mounting member and the second mounting member in the first fluid-filled vibration-damping device can be consistently transmitted between the first input member and the second input member in the second fluid-filled vibration-damping device, while relative pressure fluctuations between the pressure-receiving chamber and the equilibrium chamber in the second fluid-filled vibration-damping device, and accordingly the high attenuating action produced thereby, can be exhibited consistently. Thus, high attenuating action against yawing vibration which is afforded by the first fluid-filled vibration-damping device, and high attenuating action against idling vibration which is afforded by the second fluid-filled vibration-damping device, can each be exhibited in a consistent manner.

### BRIEF DESCRIPTION OF THE DRAWINGS

The foregoing and/or other objects features and advantages of the invention will become more apparent from the following description of a preferred embodiment with reference to the accompanying drawings in which like reference numerals designate like elements and wherein:
FIG. 1 is a side elevational view for schematically illustrating a power unit support structure according to a first embodiment of the present invention;
FIG. 2 is a vertical cross sectional view of a rear engine mount of the power unit support structure of FIG. 1, taken along line 2-2 of FIG. 4;
FIG. 3 is a top plane view of the rear engine mount of FIG. 2;
FIG. 4 is a transverse cross sectional view of a fluid-filled vibration-damping device used as the rear engine mount, taken along line 4-4 of FIG. 2;
FIG. 5 is a vertical cross sectional view of a rear engine mount of a power unit support structure according to a second embodiment, taken along line 5-5 of FIG. 7;
FIG. 6 is a top plane view of the rear engine mount of FIG. 5;
FIG. 7 is a transverse cross sectional view of a fluid-filled vibration-damping device used as the rear engine mount, taken along line 7-7 of FIG. 5;
FIG. 8 is a vertical cross sectional view of a rear engine mount of a power unit support structure according to a third embodiment;
FIG. 9 is a view showing an examination method;
FIG. 10 is a graph showing measurements of vibration level in the vehicle vertical direction at the installation site of each mount in the power unit;
FIG. 11 is a graph showing measurements of vibration level in the vehicle lateral direction at the installation site of each mount in the power unit;
FIG. 12 is a graph showing measurements of vibration level in the vehicle lateral direction at the installation site of the rear engine mount in the power unit;
FIG. 13 is a graph showing measurements of vibration level in the vehicle vertical direction at the installation site of the rear engine mount in the power unit;
FIG. 14 is a graph showing measurements of vibration level in the vehicle lateral direction taken at the respective installation sites of the front mounts and the rear engine mount of the power unit during input of yawing vibration;
FIG. 15 is a graph showing measurements of vibration-damping effect during input of yawing vibration;
FIG. 16 is a graph showing measurements of vibration-damping effect during input of idling vibration; and
FIG. 17 is a vertical cross sectional view of a fluid-filled vibration-damping device used as the rear engine mount, which has different arrangement.

### DETAILED DESCRIPTION OF PREFERRED EMBODIMENTS

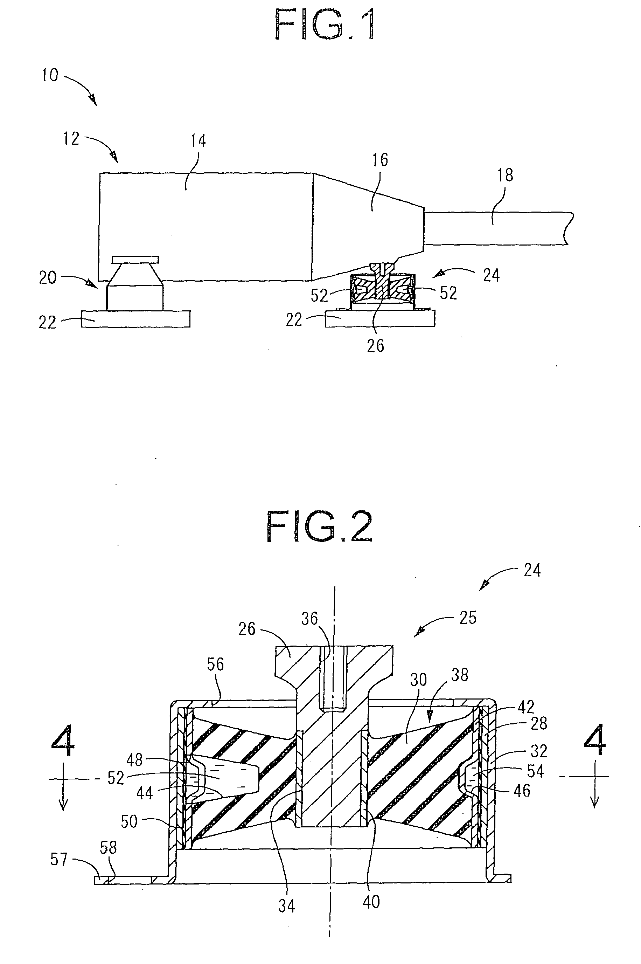

FIG. 1 depicts in simplified form a side view showing an entire power unit support structure 10 according to a first embodiment of the present invention. The power unit 12 is a power unit for an automobile of FR design, and includes an engine unit 14 provided as the internal combustion engine, and a transmission unit 16 provided as the gear box. Output and torque generated by the engine unit 14 are adjusted by the gear train of the transmission unit 16 to the level of output and torque required for driving the vehicle, and are output to an output shaft (not shown), then transmitted as rotational driving force to from the output shaft via a propeller shaft 18 to the drive wheels, i.e. the rear wheels.

To describe in greater detail, the power unit 12 is oriented lengthwise in the vehicle longitudinal direction so that the direction of extension of the propeller shaft 18 is aligned with the vehicle longitudinal direction (the sideways direction in FIG. 1), with the engine unit 14 situated towards the vehicle front (to the left in FIG. 1) and the axial direction of the crankshaft (not shown) oriented longitudinally in the vehicle longitudinal direction. Via a pair of front mounts 20, the engine unit 14 which has been positioned towards the vehicle front end is provided with vibration-damped support at its left and right sides on a frame 22 which has been disposed on the vehicle body; while the transmission unit 16 which has been positioned towards the vehicle back end is provided in its laterally medial section with vibration-damped support on the frame 22 via a rear engine mount 24. In FIG. 1, the rear engine mount 24 is depicted in longitudinal cross section to facilitate understanding. Through this arrangement, the power unit 12 will be supported in vibration-damped fashion on the vehicle body by the front mounts 20 and the rear engine mount 24, at two locations towards the vehicle front and one location towards the vehicle back, respectively.

The rear engine mount 24 is depicted in FIGS. 2 to 4. The rear engine mount 24 is composed of a first fluid-filled vibration-damping device 25 attached to a bracket 32. The first fluid-filled vibration-damping device 25 has a construction wherein a first mounting member 26 and an second mounting member 28 are positioned spaced a prescribed distance apart from one another in the diametrical direction, and are linked by a main rubber elastic body 30 interposed between them. The rear engine mount 24 is then interposed between the power unit 12 and the vehicle body by securing the first mounting member 26 of the first fluid-filled vibration-damping device 25 to the transmission unit 16 of the power unit 12, and securing the second mounting member 28 to the frame 22 via the bracket 32. In this installed state, the distributed support load of the power unit 12 is directed along the axial direction of the first mounting member 26 and the second mounting member 28; and the principal vibrations intended to be damped will be input in the axis-perpendicular direction of the first mounting member 26 and the second mounting member 28. FIG. 2 and FIGS. 5 and 8 to be discussed later depict conditions under the distributed support load of the power unit 12. In the following description, the vertical direction shall as a general rule refer to the vertical direction in FIG. 2 unless indicated otherwise.

The first mounting member 26 has a solid rod profile that flares out at its axial upper end, and at its axial lower end there is formed a mating portion 34 of slightly smaller diameter extending with prescribed dimension in the axial direction. The first mounting member 26 is designed to be securely mounted on the transmission unit 16 of the power unit 12 using a bolt hole 36 formed at the center. An integrally vulcanization-molded component 38 is secured fitting onto the exterior of the first mounting member 26.

The integrally vulcanization-molded component 38 has a construction wherein a middle sleeve 42 with a generally large-diameter tube profile is disposed to the outside peripheral side of an inner sleeve 40 with a small-diameter tube profile, and is positioned approximately concentrically with and spaced apart diametrically to the outside of the inner sleeve 40 so as to encircle it. The main rubber elastic body 30 is interposed between the inner sleeve 40 and the middle sleeve 42 so that these are elastically linked by the main rubber elastic body 30. The main rubber elastic body 30 has a thick-walled, generally tubular profile, the inside peripheral wall of which is vulcanization bonded to outside peripheral face of the inner sleeve 40 and the outside peripheral wall of which is vulcanization bonded to inside peripheral face of the middle sleeve 42. Through this arrangement, the main rubber elastic body 30 constitutes the integrally vulcanization-molded component 38 incorporating the inner sleeve 40 and the middle sleeve 42 which are respectively vulcanization bonded to its inside and outside peripheral faces.

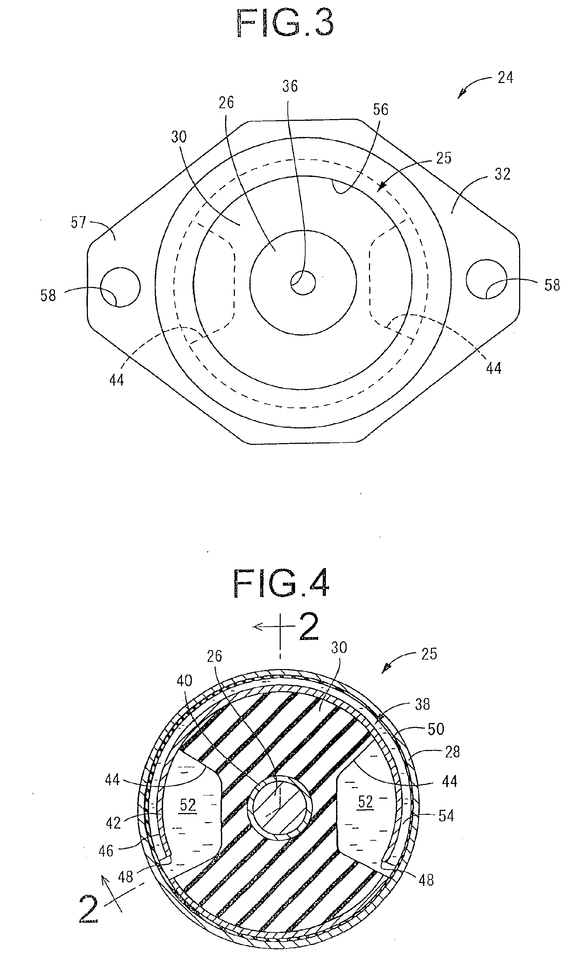

In the main rubber elastic body 30 which is part of the integrally vulcanization-molded component 38, there are formed a pair of pocket portions 44 that are positioned in opposition to either side of the inner sleeve 40 along a diametrical axis (sideways in FIG. 4). The pocket portions 44 take the form of recesses that open onto the outside peripheral face of the main rubber elastic body 30 over an area slightly shorter than one-half the circumference of the main rubber elastic body 30. Under the distributed support load of the power unit 12, the main rubber elastic body 30 will be generally symmetrical contours in the vehicle vertical direction to either side of fluid chambers 52, discussed later.

The middle sleeve 42 which is vulcanization bonded to the outside peripheral face of the main rubber elastic body 30 is of generally tubular shape of an axial dimension slightly larger than that of the inner sleeve 40; its axial medial section projects diametrically inward across a prescribed width to define a circumferential recess 46 that opens diametrically outward and extends with prescribed dimension in the circumferential direction. Through-holes 48 that pass through the middle sleeve 42 in its thickness direction are respectively formed at both circumferential ends of this circumferential recess 46 so that the pocket portions 44 of the main rubber elastic body 30 open diametrically outward towards the middle sleeve 42 through the through-holes 48.

The second mounting member 28 fits externally onto the integrally vulcanization-molded component 38 having the above construction. The second mounting member 28 has a large-diameter tube profile with an axial dimension approximately equal to that of the middle sleeve 42; its inside peripheral face is sheathed substantially entirely by a thin seal rubber layer 50. Once the second mounting member 28 has been fitted externally onto the integrally vulcanization-molded component 38, it will be reduced in diameter through a process such as 360-degree radial compression or eight-die using drawing to secure it fitting onto the exterior of the integrally vulcanization-molded component 38.

With this arrangement, the second mounting member 28 will be positioned spaced apart a prescribed distance to the outside peripheral side of the first mounting member 26, with the first mounting member 26 and the second mounting member 28 joined by the main rubber elastic body 30. At the same time, the outside peripheral face of the middle sleeve 42 will be covered by the seal rubber layer 50 so that the pocket portions 44 define a pair of fluid chambers 52 whose walls are partially constituted by the main rubber elastic body 30 and whose interiors are filled with a non-compressible fluid. This pair of fluid chambers 52 are formed around the first mounting member 26 and are spaced apart by prescribed distances in the circumferential direction of the second mounting member 28 so as to be situated in opposition to either side of the first mounting member 26 in the diametrical direction of the first mounting member 26. The circumferential recess 46 is also covered by the seal rubber layer 50, thereby defining a first orifice passage 54 interconnecting the pair of fluid chambers 52 through the through-holes 48 of the circumferential recess 46. In the present embodiment, the first orifice passage 54 has length and cross-sectional area established such that it will exhibit vibration-damping action based on resonance action of fluid caused to flow through the first orifice passage 54, against the frequency of yawing vibration of the power unit 12, specifically, vibration input on the order of 10 Hz.

Filling with non-compressible fluid may be accomplished, for example, by carrying out assembly of the integrally vulcanization-molded component 38 and the second mounting member 28 while these components are immersed in the fluid. As the non-compressible fluid it would be possible to employ water, an alkylene glycol, polyalkylene glycol, silicone oil, or the like; in terms of effectively achieving vibration-damping action based on resonance action of the fluid, it is especially preferable to use a low-viscosity fluid of 0.1 Pa • s or less.

The first fluid-filled vibration-damping device 25 constructed as described above will then be secured by press-fitting into the bracket 32 which is open at the bottom and has a generally cup-shaped profile, with the first mounting member 26 projecting out through a through-hole 56 provided in the upper base of the bracket 32. The bracket 32 also has a flanged portion 57 that projects diametrically outward at its bottom end and that is perforated by bolt holes 58; using the bolt holes 58, the bracket 32 may be secured to the frame 22 of the vehicle body. The first mounting member 26 is mounted with bolts or the like onto the transmission unit 16 of the power unit 12, while the second mounting member 28 is mounted onto the frame 22 via the bracket 32, whereby the rear engine mount 24 is installed between the power unit 12 and the vehicle body.

In this installed state, if vibration is input across the first mounting member 26 and the second mounting member 28 along a diametrical axis coincident with the direction of opposition of the fluid chambers 52, 52, relative internal pressure changes will arise between the two fluid chambers 52, 52, and fluid flow will take place through the first orifice passage 54 on the basis of these internal pressure changes. As a result, effective vibration-damping action will be exhibited on the basis of resonance action or other such flow action of the fluid caused to flow through the first orifice passage 54.

In the present embodiment in particular, as shown in FIG. 1, the power unit 12 is secured in such a way that the fluid chambers 52, 52 are situated in opposition to either side of the first mounting member 26 in the longitudinal direction of the vehicle. For this reason, vibration-attenuating action based on flow action of the fluid caused to flow through the first orifice passage 54 will be exhibited effectively against vibration input in the vehicle longitudinal direction.

In the power unit support structure 10 constructed in the above manner, if yawing vibration should occur in the power unit 12, this will result in vibrations that include translation motion in the vehicle longitudinal direction occurring in the transmission unit 16 situated towards the vehicle back end of the power unit 12, and thus vibrations will be input to the rear engine mount 24 along a diametrical axis coincident with the direction of opposition of the fluid chambers 52, 52. Relative pressure fluctuations will thereby arise between the fluid chambers 52, 52, producing vibration-attenuating action based on flow action of the fluid caused to flow through the first orifice passage 54. Yawing vibration of the power unit 12 will be reduced as a result.

Accordingly, in the power unit support structure 10 of the present embodiment in particular, the fluid chambers 52, 52 of the rear engine mount 24 are situated in opposition in the vehicle longitudinal direction. When idling vibration having a higher frequency range than yawing vibration is input, since idling vibration represents vertical direction vibration, the first mounting member 26 and the second mounting member 28 will experience relative displacement in the vehicle vertical direction. Consequently, relative changes in volume of the fluid chambers 52, 52 will be limited, and substantially no fluid flow will be produced in the first orifice passage 54. As a result, it will be possible to avoid high dynamic spring caused by the first orifice passage 54 assuming a substantially obstructed condition, so excellent vibration isolating action can be obtained at times of input of idling vibration as well. In the present embodiment in particular, because the main rubber elastic body 30 has symmetrical contours in the vehicle vertical direction to either side of the fluid chambers 52, relative changes in volume of the fluid chambers 52, 52 during input of vertical direction vibrations such as idling vibration will be limited more effectively, and vibration isolating action will be exhibited more effectively against vibration input in the vehicle vertical direction.

The specific structure of the mount situated towards the vehicle rear end in the power unit support structure of the present invention is not limited to one such as that described above. While a number of alternative modes for the mount situated towards the vehicle rear end will be shown below, it should be understood that these modes are not intended as limiting of the present invention. In the following description, parts and components that are substantially comparable in construction to those in the preceding first embodiment are assigned like symbols and will not be discussed in detail.

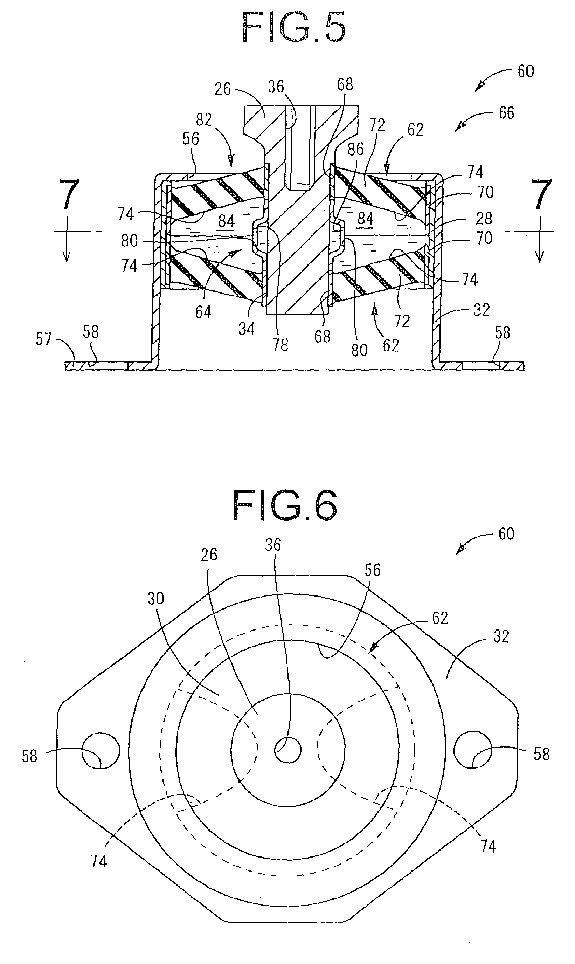

FIGS. 5 to 7 depict a rear engine mount 60 situated towards the vehicle rear end in a power unit support structure according to a second embodiment of the present invention. The rear engine mount 60 includes a first fluid-filled vibration-damping device 66 that has a pair of integrally vulcanization-molded components 62 secured fitting externally onto the first mounting member 26, to either side of an orifice fitting 64.

The pair of integrally vulcanization-molded components 62, 62 are comparable in construction to one another, each having a middle sleeve 70 with a large-diameter tube profile disposed to the outside peripheral side of an inner sleeve 68 with a small-diameter tube profile, and positioned approximately concentrically with and spaced apart diametrically to the outside of the inner sleeve 68 so as to encircle it; and a sectional main rubber elastic body 72 interposed between the inner sleeve 68 and the middle sleeve 70 so that these are elastically linked by the sectional main rubber elastic body 72. The sectional main rubber elastic bodies 72 have a generally tubular profile, and define a pair of concave pocket portions 74, 74 that open to one side in the axial direction so as to be situated in opposition to either side of the inner sleeve 68 along a diametrical axis (the sideways direction in FIG. 5). The sectional main rubber elastic bodies 72 are then vulcanization bonded at their inside and outside peripheral faces to the inner sleeve 68 and the middle sleeve 70 to produce a single integrally vulcanization-molded component 62.

The orifice fitting 64 has a generally tubular profile whose axial medial section projects diametrically outward about the entire circumference to define a circumferential slot 78 that opens diametrically inward and extends about the entire circumference. In the circumferential slot 78 there are formed diametrically opposed through-holes 80 that pass through the orifice fitting 64 in its thickness direction.

With the orifice fitting 64 sandwiched in the axial direction between the inner sleeves 68 of the pair of integrally vulcanization-molded components 62, the pair of inner sleeves 68 and the orifice fitting 64 will be secured fitting externally onto the mating portion 34 of the first mounting member 26.

The middle sleeves 70 of the pair of integrally vulcanization-molded components 62 are positioned in abutment with one another in the axial direction, and the second mounting member 28 is fitted about the exterior of these middle sleeves 70. The second mounting member 28 will then be secured fitting externally about the middle sleeves 70 by swaging the axial ends of the second mounting member 28 inwardly in the diametrical direction.

The first mounting member 26 and the second mounting member 28 will thereby be linked by the pair of sectional main rubber elastic bodies 72. In the present embodiment, a main rubber elastic body 82 is formed by the pair of sectional main rubber elastic bodies 72. The main rubber elastic body 82 is produced through fluidtight vulcanization bonding together of the pair of sectional main rubber elastic bodies 72 at their juxtaposed faces.

Additionally, the pocket portion 74 defined by one integrally vulcanization-molded component 62 is disposed in opposition in the vertical direction to the pocket portion 74 defined by the other integrally vulcanization-molded component 62, so that the pair of pocket portions 74 situated in opposition to one another in the vertical direction will define fluid chambers 84 whose interiors are filled with a non-compressible fluid. A pair of fluid chambers 84 situated in opposition in the diametrical direction to either side of the first mounting member 26 will thereby be defined inside the main rubber elastic body 82. With the main rubber elastic body 82 subjected to the distributed support load of the power unit 12, it will assume symmetrical contours in the vehicle vertical direction to either side of the fluid chambers 84. Sealing of the non-compressible fluid can be accomplished, for example, by carrying out assembly of the pair of integrally vulcanization-molded components 62, the orifice fitting 64, the first mounting member 26, and the second mounting member 28 while these components are submerged in the non-compressible fluid. The circumferential slot 78 of the orifice fitting 64 will be covered by the first mounting member 26, thereby defining a first orifice passage 86 interconnecting the pair of fluid chambers 84 through the through-holes 80 of the circumferential slot 78. As in the preceding first embodiment, the first orifice passage 86 will be tuned to the frequency range of yawing vibration of the power unit 12.

As in the preceding first embodiment, the rear engine mount 60 constructed in the above manner will be attached to the transmission unit 16 of the power unit 12 in such a way that the pair of fluid chambers 84 are positioned in opposition to either side of the first mounting member 26 in the vehicle longitudinal direction (i.e. so that the sideways direction in FIG. 5 is aligned with the vehicle longitudinal direction).

Additionally, because the rear engine mount 60 in the present embodiment is also capable of vibration-attenuating action based on fluid flow through the first orifice passage 86 in response to vibration input in the vehicle longitudinal direction, i.e. the direction of diametrical opposition of the fluid chambers 84, it can accordingly exhibit effective vibration-damping action against yawing vibration. At the same time, because relative volume changes of the fluid chambers 84, 84 in response to idling vibration or similar vibration input in the vertical direction will be limited, high dynamic spring arising due to the first orifice passage 86 becoming substantially obstructed may be avoided, so effective vibration isolating action against idling vibration may be achieved as well.

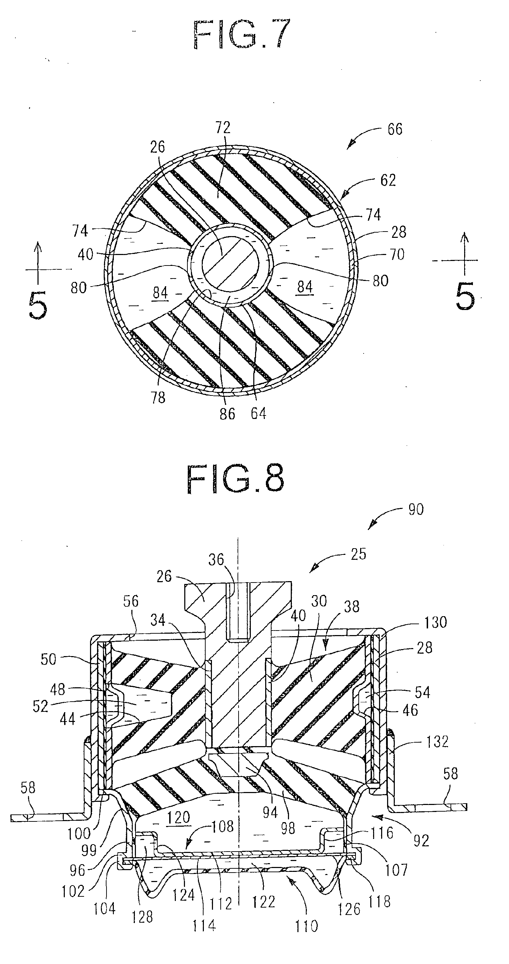

FIG. 8 depicts a rear engine mount 90 situated towards the vehicle rear end in a power unit support structure according to a third embodiment of the present invention. The rear engine mount 90 includes a second fluid-filled vibration-damping device 92 attached axially below the first fluid-filled vibration-damping device 25 in the previous first embodiment.

The second fluid-filled vibration-damping device 92 has a construction wherein a first input member 94 with a truncated conical profile, and a second input member 96 with a tubular profile, are linked by a linking rubber elastic body 98. A tapered portion 99 that flares outward towards the top is formed to the axial upper side of the second input member 96, with a flanged portion 100 that projects diametrically outward formed at the upper edge; while in the axial lower end part there are integrally formed a shoulder portion 102 that protrudes diametrically outward, and a large-diameter swaging tube 104 that extends axially downward from the outside peripheral edge of the shoulder portion 102.

The first input member 94 is disposed on the same axis as the second input member 96 and positioned some distance above its upper opening with the second input member 96 and first input member 94 elastically linked to one another by the linking rubber elastic body 98. The linking rubber elastic body 98 is defined by a rubber elastic body with a truncated conical profile having an open recess of large-diameter conical bowl contours formed at its large-diameter end. The first input member 94 has been embedded in and vulcanization bonded to the small-diameter end of the linking rubber elastic body 98, while the inside peripheral face of the tapered portion 99 of the second input member 96 has been juxtaposed against and vulcanization bonded to the outside peripheral face of the large-diameter end. The linking rubber elastic body 98 will thereby take the form of an integrally vulcanization-molded component that incorporates the first input member 94 and the second input member 96; and the opening at the axial upper end of the second input member 96 will be capped fluidtightly by the linking rubber elastic body 98. The inside peripheral face of the second input member 96 above the shoulder portion 102 is sheathed by a seal rubber layer 107 that has been formed by downwardly extending the linking rubber elastic body 98.

Also assembled with the second input member 96 are a partition member 108, and a flexible film 110.

The partition member 108 includes a partition member body 112 and a base fitting 114. The partition member body 112 is a component of generally circular disk shape formed by press working of a thin sheet of metal or the like, and having in its diametrical outside peripheral section a circumferential groove 116 that projects axially upward and opens axially downward and diametrically outward, formed with continuous prescribed length in the circumferential direction. The base fitting 114 has a thin, generally circular flat disk shape of somewhat larger diametrical dimension than the partition member body 112. The partition member 108 is produced by juxtaposing the base fitting 114 against the partition member body 112 from below along the same center axis.

Meanwhile, the flexible film 110 is formed by a readily-deformable, thin rubber elastic film. A support fitting 118 of annular plate shape has been vulcanization bonded to the outside peripheral edge of the flexible film 110.

The partition member 108 and the flexible film 110 are assembled with the second input member 96. Specifically, the partition member 108 is inserted from below into the swaging tube 104 of the second input member 96, and the outside peripheral edge of the base fitting 114 is juxtaposed from below against the shoulder portion 102 of the second input member 96. Then, the flexible film 110 is inserted from below into the swaging tube 104, and the support fitting 118 is juxtaposed from below against the base fitting 114 of the partition member 108. By subjecting the lower end of the swaging tube 104 to a swaging process in this condition, the partition member 108 and the flexible film 110 will be secured through swaging to the second input member 96.

The lower opening of the second input member 96 will thereby be capped fluidtightly by the flexible film 110, thus defining between the opposed faces of the linking rubber elastic body 98 and the flexible film 110 a fluid-filled zone that is filled with a non-compressible fluid. This fluid-filled zone will be divided into two parts situated to the upper and lower sides of the partition member 108, thereby defining to the upper side of the partition member 108 a pressure-receiving chamber 120 whose wall is partially constituted by the linking rubber elastic body 98 and that gives rise to pressure fluctuations at times of input vibration; and defining to the lower side of the partition member 108 an equilibrium chamber 122 whose wall is partially constituted by the flexible film 110 and that readily permits change in volume based on deformation of the flexible film 110.

In the partition member 108, the lower opening of the circumferential groove 116 that has been formed in the partition member body 112 will be covered by the base fitting 114 while the diametrical outside opening of the circumferential groove 116 will be covered by the seal rubber layer 107, thereby defining a tunnel-like passage that utilizes the circumferential groove 116 and extends a prescribed distance in the circumferential direction. One circumferential end of this tunnel-like passage communicates with the pressure-receiving chamber 120 through a communication hole 124 that passes in a diametrical direction through the inside peripheral wall of the circumferential groove 116 of the partition member body 112, while the other circumferential end of the tunnel-like passage communicates with the equilibrium chamber 122 through a communication hole 126 that passes through the base fitting 114 in the thickness direction. Thus, using the circumferential groove 116, there is formed a second orifice passage 128 for interconnecting the pressure-receiving chamber 120 and the equilibrium chamber 122. In the present embodiment, the passage length and cross-sectional area of the second orifice passage 128 have been adjusted so that it will exhibit high attenuating action based on resonance action of fluid caused to flow through the second orifice passage 128, in response to vibration input in a frequency range of between about 20 Hz and about 40 Hz corresponding to idling vibration.

The second fluid-filled vibration-damping device 92 constructed in the above way will be positioned on the same center axis and attached to the bottom of the first fluid-filled vibration-damping device 25 of the preceding first embodiment. In the present embodiment, the first fluid-filled vibration-damping device 25 will be pressure-fit into a cover fitting 130 having a bottomed tubular profile so that the first mounting member 26 projects out through a through-hole 56 provided in the upper base of the cover fitting 130; while the second fluid-filled vibration-damping device 92 will be inserted into the cover fitting 130, and the flanged portion 100 of the second fluid-filled vibration-damping device 92 juxtaposed from below against the first fluid-filled vibration-damping device 25. By then swaging the lower end part of the cover fitting 130, the second input member 96 will be attached to the second mounting member 28 via the cover fitting 130 so that the first fluid-filled vibration-damping device 25 and the second fluid-filled vibration-damping device 92 are attached to one another while juxtaposed on the same center axis.

Once the rear engine mount 90 has been assembled in the above manner, the rear engine mount 90 will be inserted into a bracket 132 of round tubular shape for example and secured therein by welding or the like; and the bracket 132 will then be secured to the frame 22 using bolt holes 58 that have been drilled through a flanged portion that projects diametrically outward at the bottom edge of the bracket 132, while the first mounting member 26 will be secured to the power unit 12 so that the mount is disposed intervening between the power unit 12 and the vehicle body. Also, the rear engine mount 90 of the present embodiment will be secured to the power unit 12 in such a way that the pair of fluid chambers 52, 52 of the first fluid-filled vibration-damping device 25 are disposed in opposition to either side of the first mounting member 26 in the vehicle longitudinal direction.

At this point, the first mounting member 26 of the first fluid-filled vibration-damping device 25 will be situated in abutment against the first input member 94 via the linking rubber elastic body 98 of the second fluid-filled vibration-damping device 92; and in the present embodiment, the distributed support load of the power unit 12 will be supported by the main rubber elastic body 30 of the first fluid-filled vibration-damping device 25 and the linking rubber elastic body 98 of the second fluid-filled vibration-damping device 92. Thus, elastic deformation of the main rubber elastic body 30 in the vertical direction will bear on the linking rubber elastic body 98. As in the preceding first embodiment, under the distributed support load of the power unit 12, the main rubber elastic body 30 of the first fluid-filled vibration-damping device 25 will assume generally symmetrical contours in the vehicle vertical direction to either side of fluid chambers 52.

Where the rear engine mount 90 constructed as above is employed, in the event that yawing or similar vibration accompanied by translation motion in the vehicle longitudinal direction is input, only the first mounting member 26 will experience displacement in the vehicle longitudinal direction, with substantially no displacement of the first input member 94. Thus, substantially no fluid flow will be produced in the second orifice passage 128 which has been provided to the second fluid-filled vibration-damping device 92, and fluid flow will be produced only in the first orifice passage 54 which has been provided to the first fluid-filled vibration-damping device 25 so that vibration-attenuating action can be exhibited by the first fluid-filled vibration-damping device 25.

On the other hand, in the event that idling vibration or similar vibration in the vertical direction is input, elastic deformation of the main rubber elastic body 30 in the vertical direction in the first fluid-filled vibration-damping device 25 will bear on the linking rubber elastic body 98 of the second fluid-filled vibration-damping device 92, giving rise to relative pressure fluctuations between the pressure-receiving chamber 120 and the equilibrium chamber 122. At this point, since the two fluid chambers 52, 52 that have been formed in the main rubber elastic body 30 experience substantially no relative volume change in association with elastic deformation of the main rubber elastic body 30 in the vertical direction, substantially no fluid flow will be produced in the first orifice passage 54, so fluid flow will be produced only in the second orifice passage 128, and vibration-attenuating action will be exhibited by the second fluid-filled vibration-damping device 92.

Thus, according to the present embodiment, effective vibration-damping action of idling vibration will be afforded through utilization of high attenuating action against idling vibration by the second fluid-filled vibration-damping device 92. In the present embodiment in particular, the first fluid-filled vibration-damping device 25 is furnished with the pair of fluid chambers 52, 52 and the first orifice passage 54 which connects them, together affording high attenuating action of yawing vibration, while the second fluid-filled vibration-damping device 92 is furnished with the pressure-receiving chamber 120, the equilibrium chamber 122, and the second orifice passage 128 which connects them, together affording high attenuating action of idling vibration, with these devices being constituted independently of one another. Accordingly, the devices can be separately tuned with high accuracy to give the desired damping characteristics against yawing vibration and idling vibration respectively, so that effective high attenuating action may be exhibited against both yawing vibration and idling vibration.

Next, the results of tests carried out for the purpose of demonstrating the vibration-damping action afforded by the power unit support structure constructed according to the present invention will be discussed.

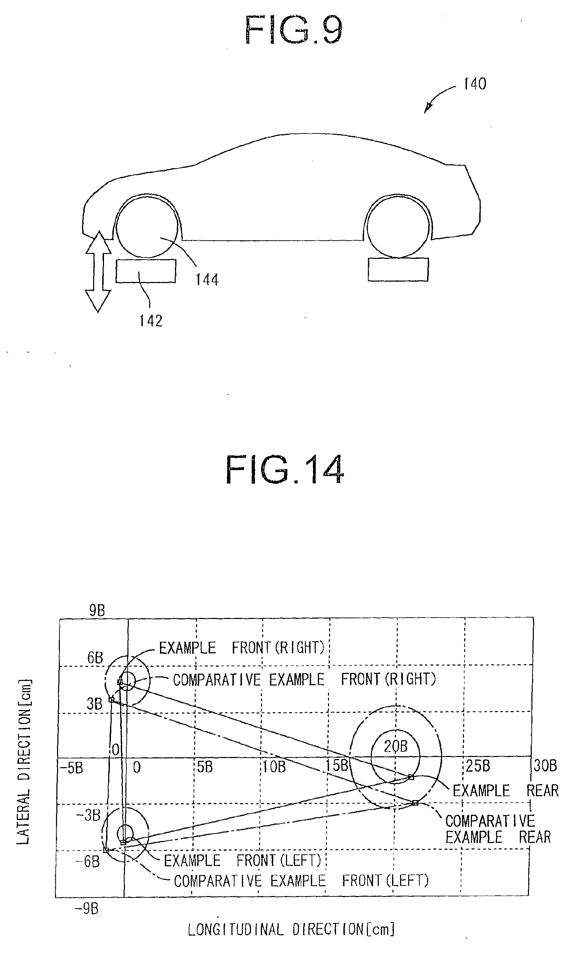

First, in order to verify the rigid body vibration mode produced in the power unit, as depicted in FIG. 9, a vehicle 140 equipped with a power unit support structure of conventional design employing fluid-filled vibration-damping devices as the front mounts and a solid type rubber mount as the rear engine mount was subjected to shaking vibration of the vehicle body by a hydraulic vibration exciter 142, input from the resting surface of the front tires 144 while gradually changing the frequency, and checking the rigid body vibration mode.

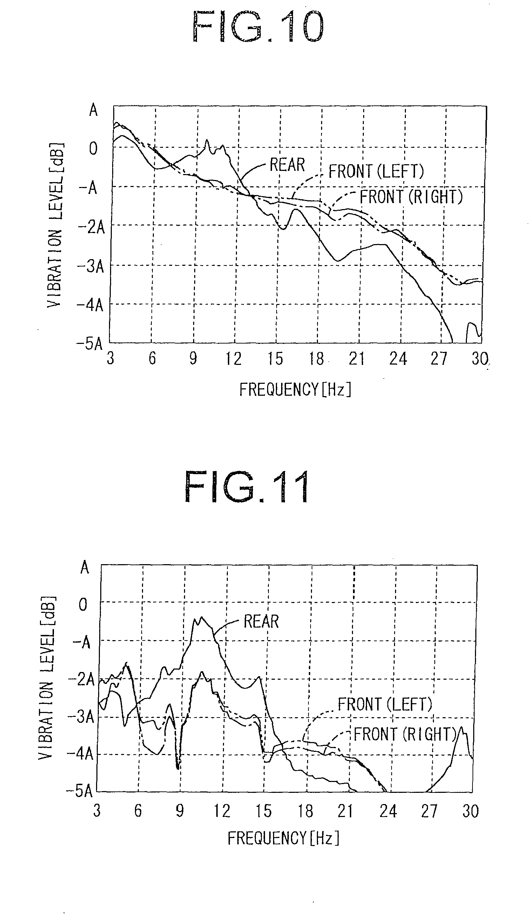

FIG. 10 gives measurements of vibration level in the vehicle vertical direction at the installation site of each mount in the power unit, while FIG. 11 gives measurements of vibration level in the vehicle lateral direction. As will be appreciated from these results, at the installation site of the rear engine mount, rigid body resonance occurring at around 10 Hz, that is, yawing vibration occurring at around 10 Hz, was verified.

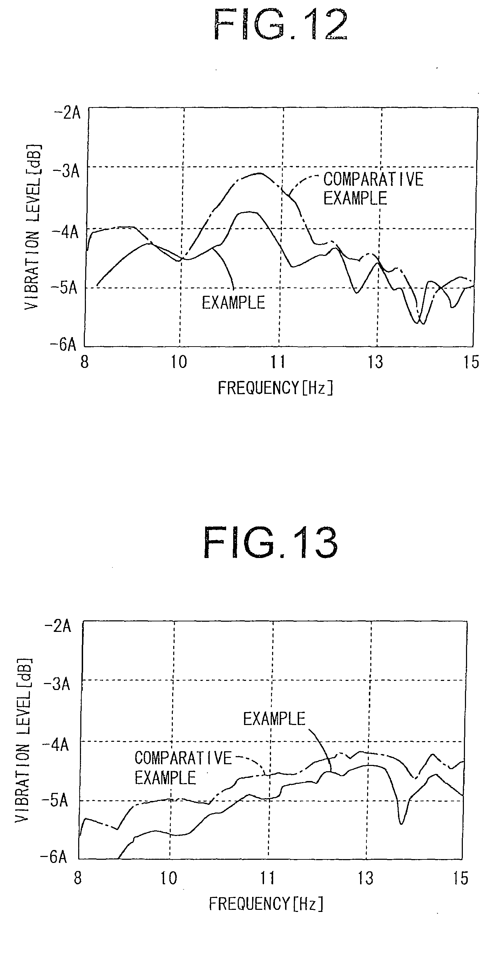

Next, for an Example employing a power unit support structure constructed according to the present invention, and a Comparative Example employing a power unit support structure of conventional design, measurements of vibration levels in the vehicle lateral direction taken at the rear engine mount installation site are shown in FIG. 12, while measurements of vibration levels in the vertical direction are shown in FIG. 13. In this test, a rear engine mount constructed according to the preceding third embodiment was employed in the Example. For the Comparative Example on the other hand, a solid type rubber mount of known design was employed. In both the Example and the Comparative Example, fluid-filled vibration-damping devices of similar construction were employed for the front mounts.

As will be appreciated from FIG. 12, it was demonstrated that with the power unit support structure constructed according to the present invention, the vibration level in the lateral direction at around 10 Hz, corresponding to yawing vibration, can be reduced appreciably. Further, as will be appreciated from FIG. 13, the power unit support structure constructed according to the present invention gives somewhat better results than the conventional structure in relation to vibration-damping effect in the vertical direction as well. These results demonstrate that the power unit support structure constructed according to the present invention can appreciably reduce yawing vibration without adverse affect on vibration-damping action in the vertical direction.

FIG. 14 gives measurements of vibration level in the lateral direction taken at the respective installation sites of the front mounts and the rear engine mount of the power unit during input of vibration at around 10 Hz, corresponding to yawing vibration. In FIG. 14 the vertical axis shows mount installation location relationships in the vehicle lateral direction, and the horizontal axis shows mount installation location relationships in the vehicle longitudinal direction. The radius of each circle in FIG. 14 indicates the vibration level at the installation location of the front mounts and the rear engine mount; a larger radius of the circle indicates a higher vibration level.

From FIG. 14 as well it was demonstrated that the use of the power unit support structure constructed according to the present invention affords appreciably reduced vibration level in the lateral direction at the rear engine mount installation site as compared with the Comparative Example. It will further be appreciated from FIG. 14 that where the power unit support structure constructed according to the present invention is used, lateral direction vibration can be reduced even at the front side of the power unit, despite the fact that mounts of identical construction were used as the front mounts. This demonstrates the ability to reduce vibration of the power unit as a whole.

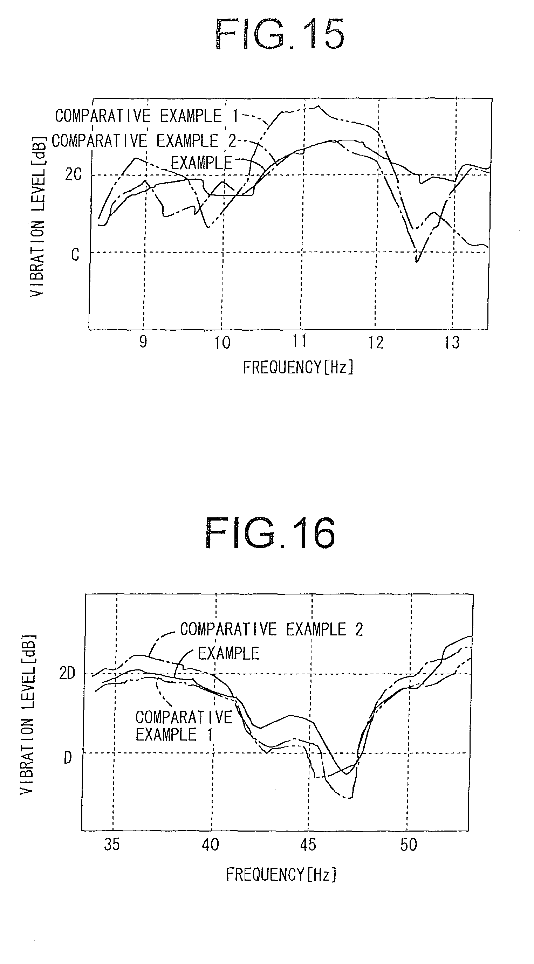

Next, for a Comparative Example 1 employing as the rear engine mount a solid type rubber mount of conventional design, a Comparative Example 2 employing a fluid-filled vibration-damping device designed to exhibit vibration-attenuating action in response to vibration input in the vehicle lateral direction, and an Example employing a fluid-filled vibration-damping device designed to exhibit vibration-attenuating action in response to vibration input in the vehicle longitudinal direction in accordance with the present invention, FIG. 15 gives measurements of vibration-damping effect taken in a frequency range corresponding to yawing vibration, while FIG. 16 gives measurements of vibration-damping effect taken in a frequency range corresponding to idling vibration. The vibration levels indicated in FIGS. 15 and 16 were obtained by taking measurements of vibration level occurring on the vehicle floor.

From FIG. 15, it will be appreciated that, in the case of vibration input of around 11 Hz corresponding to yawing vibration, the Example of the present invention affords vibration-damping action comparable to Comparative Example 2 and better than Comparative Example 1. Meanwhile, in the case of vibration input of around 40 Hz corresponding to idling vibration, the Example of the present invention affords vibration-damping action comparable to Comparative Example 1 and better than Comparative Example 2. Consequently, the results presented in FIGS. 15 and 16 show that when evaluated in terms of overall vibration-damping capability against both yawing vibration and idling vibration, the engine mount of the Example of the present invention affords better vibration-damping capability than do Comparative Example 1 and Comparative Example 2.

While the present invention has been described in detail in terms of certain preferred embodiments, it is to be understood that the invention is by no means limited to the specific disclosure of the illustrated embodiments, and may be embodied with various changes, modifications and improvements which may occur to those skilled in the art without departing from the spirit and scope of the invention.

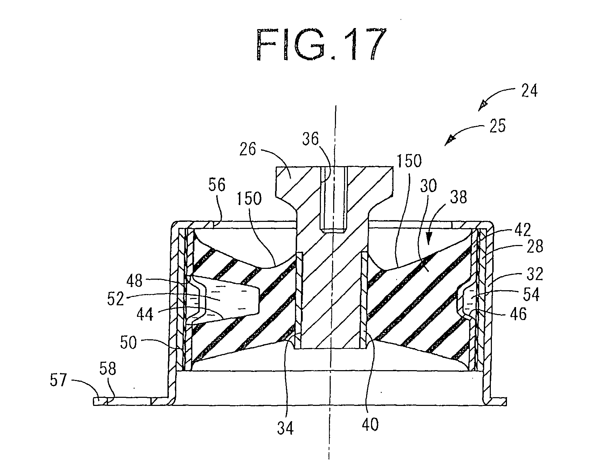

Various known designs may be employed appropriately for the fluid-filled vibration-damping device used as the rear end mount; for example, the main rubber elastic body 30 could be provided with concave hollowed portions 150 that open upward as depicted by way of example in the rear engine mount 24 of the first embodiment in FIG. 17. With such a design, in the event that sharp vibrations are input to the main rubber elastic body 30, the main rubber elastic body 30 will experience flexural elastic deformation of the thin zones where the hollowed portions 150 have been formed, so that internal stress of the main rubber elastic body 30 can be advantageously dispersed, and durability of the main rubber elastic body 30 can be improved.

Additionally, whereas the first fluid-filled vibration-damping device 25, 66 in each of the preceding embodiments employs a solid first mounting member 26 as the first mounting member, a hollow second input member having a tubular profile could instead be used as the first mounting member.

Furthermore, in the power unit support structure according to the present invention, while any of various known designs may of course be employed as the engine mounts for installation at two locations towards the vehicle front end, it is also possible to employ any of the various fluid-filled designs discussed above as the engine mount for installation at a single location towards the vehicle back end as well. As engine mounts for installation at a single location it would also be possible to employ a plurality of engine mounts that are installed in parallel, but are substantially or completely independent.

Various design modifications may be made to the engine mount employed in the present invention according to other required support characteristics or vibration-damping characteristics. To give specific examples, it would be possible to additionally provide a pair of fluid chambers situated in opposition in the vehicle lateral direction to either side of the first mounting member and a fluid passage interconnecting these fluid chambers, with a view to improving vibration-damping characteristics in the vehicle lateral direction on the basis of fluid flow through the fluid passage; or to form lightening recesses, hollowing holes bored in the axial direction, or the like in order to adjust the volume of the main rubber elastic body in the sections thereof situated in opposition to either side of the first mounting member in the vehicle lateral direction, so as to adjust the spring rigidity in the vehicle lateral direction to a lower level. Alternatively, the fluid chambers which are disposed in opposition in the vehicle longitudinal direction may be constricted in their medial section in the vehicle vertical direction in order to define a constricted portion, so that vibration-damping effect in the vehicle vertical direction may be exhibited on the basis of flow action of fluid flowing vertically through the constricted portion inside the fluid chambers.

Additionally, the specific constructions of the rear engine mounts 24, 60, 90 shown by way of example in the preceding embodiments may be modified appropriately in design for the purpose of greater ease of fabrication, or of improved freedom in orifice tuning for example. To give a specific example, in the rear engine mount 24 of the first embodiment, with the aim of facilitating molding of the main rubber elastic body or improving freedom in design of orifice length and cross sectional area, it would be possible to employ an orifice member that is a separate element from the middle sleeve 42 which has been vulcanization bonded to the outside peripheral face of the main rubber elastic body 30, and to attach this orifice member so that it extends in the circumferential direction between the middle sleeve 42 and the second mounting member 28. Or, whereas in the rear engine mount 90 of the third embodiment the second fluid-filled vibration-damping device 92 substantially separate from the first fluid-filled vibration-damping device 25 was employed in order to prevent input vibration in the vehicle vertical direction from having adverse effects on the vibration-damping characteristics of the first fluid-filled vibration-damping device 25, depending on considerations such as the required characteristics, the linking rubber elastic body of the second fluid-filled vibration-damping device 92 could instead be constituted by the main rubber elastic body 30 of the first fluid-filled vibration-damping device 25.

Further, the present invention has applicability to engine support mechanisms of lower side support design wherein the vibration-damping device is situated vertically below the center of gravity of the engine unit; or to engine support mechanisms of suspension design wherein the vibration-damping device is situated vertically above the location of the center of gravity of the engine unit.

Power units implementing the present invention are not limited in any way as to the combustion chamber layout, combustion mechanism, or other engine design aspects, and the present invention has applicability, for example, in various engine design such as series system (L type), V type, four-cylinder, six-cylinder, gasoline engine, or diesel engine designs.

## Claims

1. A power unit support structure (10) adapted to provide vibration-damped support of an power unit (12) of an automobile of FR longitudinal engine design on a vehicle body via engine mounts situated at two locations towards a vehicle front end and one location towards a vehicle back end, respectively; the power unit support structure (10) being **characterized in that:**
of the engine mounts disposed at the three locations, a fluid-filled vibration-damping device (25, 66, 92) exhibiting vibration-attenuating action based on flow action of non-compressible fluid filling the interior thereof is employed as a rear engine mount (24, 60, 90) disposed at the vehicle back end; and
the vibration-attenuating action based on the flow action of the non-compressible fluid is exhibited against vibration input in a vehicle longitudinal direction.

2. The power unit support structure (10) according to claim 1, wherein a first fluid-filled vibration-damping device (25, 66) is employed as the rear engine mount (24, 60, 90), the first fluid-filled vibration-damping device (25, 66) including: a first mounting member (26) mounted on one of a power unit side or a vehicle body side; a second mounting member (28) mounted on another of the power unit side or the vehicle body side; a main rubber elastic body (30, 82) elastically connecting the first and second mounting member (26, 28); a plurality of fluid chambers (52, 84) whose walls are partially defined by the main rubber elastic body (30, 82) and that are filled with the non-compressible fluid; and a first orifice passage (54, 86) interconnecting the plurality of fluid chambers (52, 84), the first fluid-filled vibration-damping device (25, 66) adapted to exhibit the vibration-attenuating action based on the flow action of the non-compressible fluid through the first orifice passage (54, 86).

3. The power unit support structure (10) according to claim 2, wherein the main rubber elastic body (30, 82) which partially defines the walls of the fluid chambers (52, 84) in the first fluid-filled vibration-damping device (25, 66) is of symmetrical shape to either side of the fluid chambers (52, 84) in a vehicle vertical direction, when positioned supporting the power unit (12).

4. The power unit support structure (10) according to claim 2 or 3, wherein the first fluid-filled vibration-damping device (25, 66) is constituted such that the second mounting member (28) having a tubular profile is disposed a prescribed distance away to an outside of the first mounting member (26) having a rod profile, with the first mounting member (26) and the second mounting member (28) linked by the main rubber elastic body (30, 82), and the plurality of fluid chambers (52, 84) are disposed about the first mounting member (26) along a circumferential direction of the second mounting member (28), with at least one pair of the plurality of fluid chambers (52, 84) communicating with one another through the first orifice passage (54, 86); and
wherein the rear engine mount (24, 60, 90) is positioned such that the fluid chambers (52, 84) communicating with each other through the first orifice passage (54, 86) are situated in opposition to either side of the first mounting member (26) in the vehicle longitudinal direction.

5. The power unit support structure (10) according to any one of claims 2-4, wherein a second fluid-filled vibration-damping device (92) is employed as the rear engine mount (90), the second fluid-filled vibration-damping device (92) including: a pressure-receiving chamber (120) adapted to give rise to pressure fluctuations on the basis of elastic deformation of the main rubber elastic body (30) at times of input of vibration in a vehicle vertical direction; an equilibrium chamber (122) whose wall is partially defined by a flexible film (110) and adapted to allow change in capacity, the pressure-receiving chamber (120) and the equilibrium chamber (122) being filled with the non-compressible fluid; and a second orifice passage (128) interconnecting the pressure-receiving chamber (120) and the equilibrium chamber (122).

6. The power unit support structure (10) according to claim 5, wherein in the rear engine mount (90), the plurality of fluid chambers (52) that communicate through the first orifice passage (54) are formed independently of the pressure-receiving chamber (120) and the equilibrium chamber (122) that communicate through the second orifice passage (128); and wherein of the first orifice passage (54) and the second orifice passage (128), at the times of the input of the vibration in the vehicle longitudinal direction, effective fluid flow is produced in the first orifice passage (54) only, while at the times of the input of the vibration in the vehicle vertical direction, the effective fluid flow is produced in the second orifice passage (128) only.

7. The power unit support structure (10) according to claim 6, wherein the rear engine mount (90) includes both of the first fluid-filled vibration-damping device (25) and the second fluid-filled vibration damping device (92),
the second fluid-filled vibration-damping device (92) being constituted such that a first input member (94) is positioned at a first open end of and spaced apart from a second input member (96) of tubular profile, with the first input member (94) and the second input member (96) linked by a linking rubber elastic body (98); another open end of the second input member (96) is closed off by the flexible film (110), thereby defining between the opposed faces of the linking rubber elastic body (98) and the flexible film (110) a non-compressible fluid-filled zone; the non-compressible fluid-filled zone is bifurcated by a partition member (108) that is supported by the second input member (96) to form the pressure-receiving chamber (120) whose wall is partially defined by the linking rubber elastic body (98) and the equilibrium chamber (122) whose wall is partially defined by the flexible film (110); and the second orifice passage (128) is formed interconnecting the pressure-receiving chamber (120) and the equilibrium chamber (122), and
the first input member (94) is affixed to the first mounting member (26) of the first fluid-filled vibration-damping device (25), while the second input member (96) is affixed to the second mounting member (28) of the first fluid-filled vibration-damping device (25).

8. The power unit support structure (10) according to claim 7, wherein the second fluid-filled vibration-damping device (92) is positioned on the same center axis and attached to a bottom of the first fluid-filled vibration-damping device (25) such that the first mounting member (26) of the first fluid-filled vibration-damping device (25) is situated in abutment against the first input member (94) via the linking rubber elastic body (98) of the second fluid-filled vibration damping device (92) so that the distributed support load of the power unit (12) is supported by the main rubber elastic body (30) of the first fluid-filled vibration-damping device (25) and the linking rubber elastic body (98) of the second fluid-filled vibration-damping device (92).
